# EUROPÄISCHE PATENTANMELDUNG

(11) **EP 1 096 349 A1**
(43) Veröffentlichungstag der Anmeldung: **02.05.2001**
(21) Anmeldenummer: 99810987.0
(22) Anmeldetag: 01.11.1999
(51) Int. Cl.: G05B 19/418

(54) **Konfiguration eines Anlagenleitsystems**

(71) Anmelder: ABB RESEARCH LTD., 8050 Zürich (CH)
(72) Erfinder: Auf Der Maur, Dominik, 5408 Ennetbaden (CH); Preiss, Otto, 5079 Zeihen (CH)
(74) Vertreter: ABB Patent Attorneys

(57) **Zusammenfassung**

In einem Verfahren und einem Computersystem zur Konfiguration eines Anlagenleitsystems wird anhand einer standardisierten textuellen Gerätebeschreibung (22) von Gerätefunktionen (12) von Feldleitgeräten (1) eine visuelle Gerätedarstellung (23) auf einem graphischen Ausgabegerät erzeugt. Anhand der visuellen Darstellung werden durch einen Benutzer die Gerätefunktionen (12) interaktiv Primärgeräten (6) einer Anlage und/oder Funktionen einer Bedienstation (2) zugeordnet. Dazu zeigt das graphische Ausgabegerät eine Anlagendarstellung (27) und/oder eine Bedienungsübersicht (28).

In einer bevorzugten Variante der Erfindung wird sie bei Hoch- oder Mittelspannungsschaltanlagen eingesetzt. Dabei wird vorteilhafterweise eine Beschreibungssprache für die Gerätefunktionen entsprechend einem IEC-Standard 61850-6 verwendet.

Die Erfindung hat den Vorteil, dass eine bisher übliche textuelle Zuordnung von Signalen entfällt, und dass durch eine visuelle Programmierweise eine Konfiguration der Anlage vereinfacht und ihre Qualität verbessert wird.

## Beschreibung

### Technisches Gebiet

Die Erfindung bezieht sich auf das Gebiet der Anlagenleittechnik, insbesondere der Anlagenleittechnik für Hoch- Mittel- oder Niederspannungsschaltanlagen. Sie bezieht sich auf ein Verfahren und ein Computersystem zur Konfiguration eines Anlagenleitsystems gemäss dem Oberbegriff der Patentansprüche 1 und 10.

### Stand der Technik

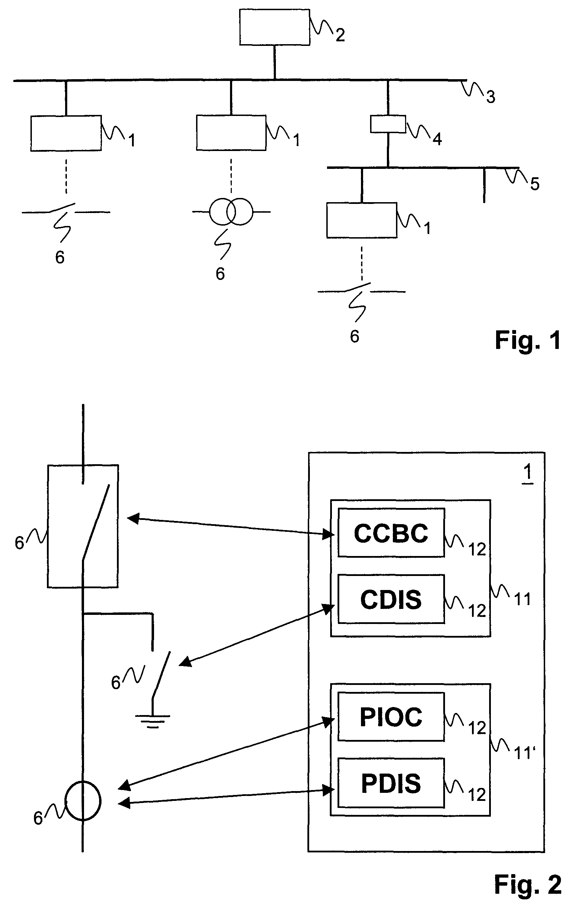

Eine Anlage, insbesondere eine Hoch- oder Mittelspannungsschaltanlage, wird durch ein verteiltes Anlagenleitsystem aus Feldleitgeräten, die über Kommunikationsbusse miteinander verbunden sind, gesteuert. Figur 1 zeigt schematisch eine Struktur eines Anlagenleitsystems mit Feldleitgeräten 1, einer Bedienstation 2, einem ersten und einem zweiten Kommunikationsbus 3,5 und einem Buskoppler 4. Die Feldgeräte 1 steuern, regeln, überwachen und schützen Primärgeräte 6 der Anlage, welche den eigentlichen Anlagenzweck erfüllen. Primärgeräte 6 sind beispielsweise Schalter, Antriebe, Generatoren oder Transformatoren. Der Buskoppler 4 verbindet Kommunikationsbusse 3,5, welche unterschiedliche Hardware- und/oder Protokoll-Eigenschaften aufweisen, so dass die Kommunikationsbusse 3,5 zusammen ein Kommunikationsnetzwerk 3,4,5 bilden. Das Kommunikationsnetzwerk 3,4,5 übermittelt Nachrichten zur Steuerung der Bedienstation 2 an die Feldleitgeräte 1 und Nachrichten der Feldleitgeräte 1 untereinander und an die Bedienstation 2, wo sie beispielsweise angezeigt oder gespeichert werden. Solche Nachrichten übermitteln beispielsweise eine Stellung eines Schalters, der durch das Feldleitgerät 1 gesteuert wird, an eine optische Anzeige innerhalb eines Anlagendiagramms und/oder an eine Ereignisliste und/oder an eine Alarmfunktion der Bedienstation 2. Ein Standard zur Definition von solchen Kommunikationsverbindungen für die Stationsleittechnik wird in einem Entwurf für einen IEC-Standard 61850 beschrieben. Eine Zusammenfassung findet sich in Vortragsunterlagen zu einem Workshop der VEW Energie AG vom 21.1.99, von Jochen Haude.

Bei einer Projektierung oder einem Engineering einer Anlage werden die Anlage und insbesondere ihre Kommunikationsverbindungen konfiguriert. Dabei erhält jedes Gerät Daten zugeordnet, welche ihm erlauben, entsprechend einer Aufgabe der Anlage mit anderen Geräten zu kommunizieren. Bei einer Konfiguration gemäss dem Stand der Technik werden Funktionen von Feldleitgeräten 1 und Funktionen einer Bedienstation 2 ausgewählt und Verbindungen zwischen den Funktionen spezifiziert. Dies geschieht mittels Signallisten, in welchen textuell spezifiziert wird, welchen Funktionen der Bedienstation 2 eine bestimmte Nachricht oder ein bestimmtes Signal eines Feldleitgerätes 1 zugeordnet ist. Einträge für die Signallisten werden in einem ersten Schritt durch Projektierungswerkzeuge der einzelnen Feldleitgeräte 1 erzeugt, wobei Feldleitgeräte 1 für Schutzfunktionen und für Steuerfunktionen im Allgemeinen unterschiedliche Projektierungswerkzeuge aufweisen. In einem zweiten Schritt werden mit Hilfe eines Integrationswerkzeugs diese Einträge gesammelt und die Signale einander manuell zugeordnet. In einem dritten Schritt werden Spezifikationsdaten für die einzelnen Feldleitgeräte 1 und die Bedienstation 2 erzeugt, welche für jedes Signal resp. jede Nachricht eine Empfängeradresse entsprechend der Zuordnung angeben. Die Spezifikationsdaten werden in Dateien gespeichert, welche je den verschiedenen Feldleitgeräten 1 und der Bedienstation 2 zugeordnet sind. Bei einer physischen Installation eines Feldleitgerätes 1 und einer Inbetriebnahme der Anlage werden diese Spezifikationsdaten im Feldleitgerät 1 und in der Bedienstation 2 geladen.

Die manuelle Bearbeitung der textuellen Signallisten mittels des Integrationswerkzeugs ist aufgrund einer hohen Anzahl von Signalen, d.h. 10'000 bis 60'000 Signalen, mühsam und fehleranfällig. Dadurch entstehende Fehler führen später zu einem erhöhten Inbetriebnahmeaufwand sowie Fehler im Betrieb. Nachträgliche Korrekturen der Anlage sind schwer durchzuführen und riskant.

### Darstellung der Erfindung

Es ist deshalb Aufgabe der Erfindung, ein Verfahren und ein Computersystem zur Konfiguration eines Anlagenleitsystems der eingangs genannten Art zu schaffen, welche die oben genannten Nachteile behebt.

Diese Aufgabe lösen ein Verfahren und ein Computersystem zur Konfiguration eines Anlagenleitsystems mit den Merkmalen der Patentansprüche 1 und 10.

In erfindungsgemässen Verfahren zur Konfiguration eines Anlagenleitsystems, bei welchem eine standardisierte textuelle Beschreibung von Funktionen von Feldleitgeräten verwendet wird, wird anhand der textuellen Beschreibung eine visuelle Darstellung von mindestens einer Gerätefunktione auf einem graphischen Ausgabegerät erzeugt, und wird mindestens eine Gerätefunktion in der visuellen Darstellung entsprechend einer Benutzereingabe mittels eines graphischen Eingabegerätes mindestens einem von weiteren visuellen Objekten auf dem graphischen Ausgabegerät zugeordnet.

In einer bevorzugten Variante der Erfindung entsprechen die weiteren visuellen Objekte Primärgeräten einer Anlage und/oder Funktionen einer Bedienstation. Dabei zeigt das graphische Ausgabegerät eine Anlagendarstellung und/oder eine Bedienungsübersicht.

Ein wesentlicher Vorteil der Erfindung ist somit, dass eine textuelle Zuordnung von Funktionen und Signalen entfällt, und dass durch eine visuelle Programmierweise eine Konfiguration der Anlage vereinfacht und ihre Qualität verbessert wird. Durch die Verwendung einer standardisierten Funktionsbeschreibung kann eine Konsistenz einer Zuordnung von Funktionen und Signalen automatisch geprüft werden, wodurch ebenfalls die Qualität der Konfiguration verbessert.

In einer bevorzugten Variante der Erfindung wird sie bei Hoch- oder Mittelspannungsschaltanlagen eingesetzt. In dieser Variante wird vorteilhafterweise eine Beschreibungssprache für die Gerätefunktionen entsprechend einem IEC-Standard 61850-6 respektive seinem Entwurf verwendet. Dies erlaubt eine Einbindung von standardkonformen Geräten verschiedener Hersteller. Vorteilhafterweise zeigt bei dieser Variante das graphische Ausgabegerät als Anlagendarstellung ein Einzelliniendiagramm einer Schaltanlage.

In einer weiteren bevorzugten Variante der Erfindung findet die Konfiguration während einer Anlagenprojektierung und auf einem Entwicklungsrechner statt. Dabei wird vorzugsweise die textuelle Gerätebeschreibung als Datei vorgegeben.

In einer anderen bevorzugten Variante der Erfindung findet die Konfiguration während einer Inbetriebnahme der Anlage statt. Dabei werden textuelle Gerätebeschreibungen vorzugsweise durch die Feldleitgeräte an eine Bedienstation, welche auch der Konfiguration dient, geschickt. Dadurch entfällt ein Aufwand für die Projektierung der Anlage und für eine Erhaltung einer Konsistenz von Spezifikationsdaten.

Weitere bevorzugte Ausführungsformen gehen aus den abhängigen Patentansprüchen hervor.

### Kurze Beschreibung der Zeichnungen

Im folgenden wird die Erfindung anhand bevorzugter Ausführungsbeispiele, welche in den beiliegenden Zeichnungen dargestellt sind, näher erläutert. Es zeigen:
- Figur 1: schematisch eine Struktur eines Anlagenleitsystems;
- Figur 2: schematisch eine Struktur eines Feldleitgerätes;
- Figur 3: schematisch eine Struktur eines erfindungsgemässen Systems; und
- Figur 4: eine im erfindungsgemässen Verfahren verwendete graphische Darstellung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

Figur 2 zeigt schematisch eine Struktur eines Feldleitgerätes 1 mit zugeordneten Primärgeräten 6. Das Feldleitgerät 1 ist eine physikalische Einheit, die in eine oder mehrere logische Feldleitgeräte 11,11' unterteilt ist. Ein solches logisches Feldleitgerät 11,11' wiederum weist eine oder mehrere Gerätefunktionen 12 auf. Die gezeigten Funktionen sind: CCBC zur Ansteuerung eines Schalters, CDIS zur Ansteuerung eines Trenners, PIOC für eine Überstromerfassung, und PDIS für einen Distanzschutz.

Das Feldleitgerät 1 ist ein Leittechnik- oder Sekundärgerät. Es dient der Steuerung, der Regelung und dem Schutz eines oder mehrerer Primärgeräte 6. Primärgeräte 6 sind Geräte, welche eine eigentliche Funktion einer Anlage ausüben, beispielsweise Leistungsschalter, Trenner, Freileitungen, Transformatoren, Generatoren, Motoren, Turbinen, Pumpen etc.

Die Figur 2 zeigt beispielhaft Gerätefunktionen 12, wie sie in einem Entwurf für einen IEC-Standard 61850-6 beschrieben sind. Der Standard definiert unter anderem Funktionen für die Stationsleittechnik, sowie entsprechende Datentypen und Kommunikationsverbindungen. Der Standard benutzt eine Betrachtungsweise und Terminologie gemäss einem "Client/Server"-Modell, in welchem Server Dienste oder Funktionen zur Verfügung stellen. Somit werden insbesondere Feldleitgeräte 1 respektive logische Feldleitgeräte 11,11' als Server betrachtet, die ihre Gerätefunktionen 12 als Dienste zur Verfügung stellen. Die Gerätefunktionen 12 ermöglichen eine Steuerung eines Feldleitgerätes 1 durch ein anderes Gerät, beispielsweise durch eine übergeordete Bedienstation 2. Dazu werden die Dienste respektive Gerätefunktionen 12 durch Client-Programmelemente, die beispielsweise auf einer Bedienstation 2 ausgeführt werden, aufgerufen.

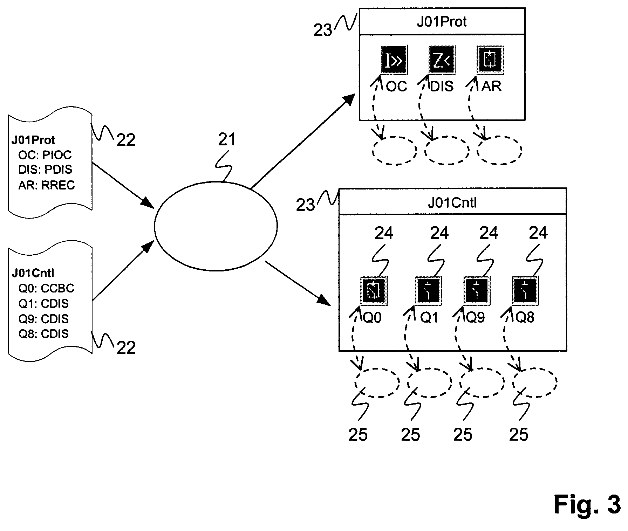

Figur 3 zeigt schematisch eine Struktur eines erfindungsgemässen Systems, mit einer Engineeringapplikation 21, welche auf mindestens eine Gerätebeschreibung 22 zugreift und mindestens eine Gerätedarstellung 23 mit mindestens einer Funktionsdarstellung 24 und zugeordeten Softwarekomponenten 25 erzeugt.

Um eine erfindungsgemässe Konfiguration der Anlage zu ermöglichen, sind die Feldleitgeräte 1 respektive die logischen Feldleitgeräte 11,11' in einer standardisierten Gerätebeschreibung 22 beschrieben. Dabei ist jede Gerätefunktion 12 von einem bestimmten Typ respektive von einer bestimmten Funktionsklasse aus einer vorgegebenen, standardisierten Menge von Funktionsklassen. Identitäten des Feldleitgerätes 1 und seiner Gerätefunktionen 12 werden durch eindeutige Namen oder Identifikationen bezeichnet. Vorzugsweise ist die Anlage eine Hoch- oder mittelspannungsschaltanlage und entspricht die standardisierte Gerätebeschreibung 22 dem IEC-Standard 61850-6 respektive seinem Entwurf.

Der untenstehende, im folgenden erläuterte Text zeigt einen Inhalt einer Gerätebeschreibung 22 eines physikalischen Feldleitgerätes 1, welches zwei logische Feldleitgeräte 11,11' aufweist. Die Zeilennummern sind nicht Teil der Beschreibung und wurden der Erläuterung wegen hinzugefügt.

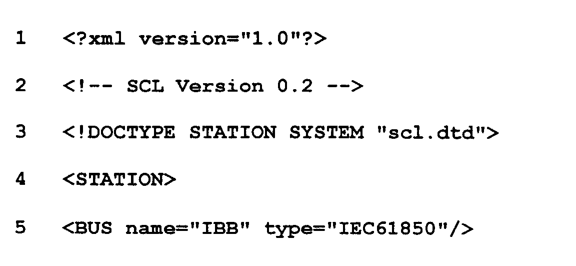

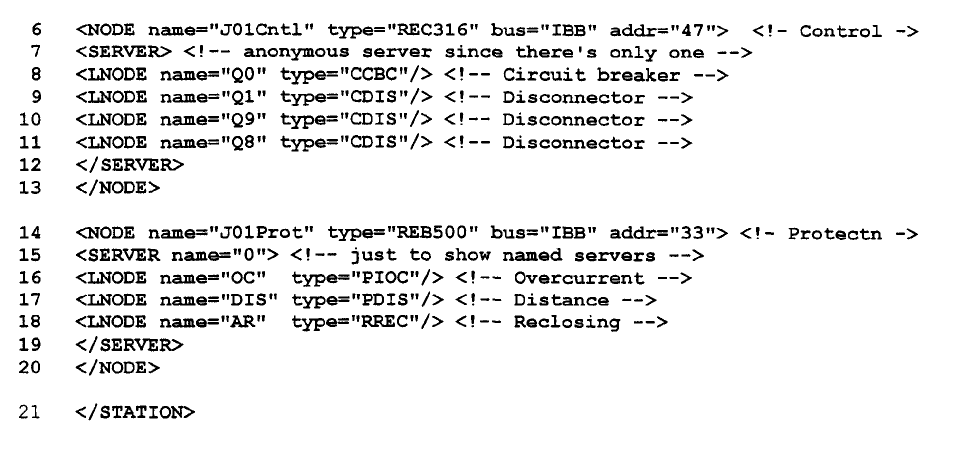

Die Zeilen spezifizieren jeweils das Folgende:
- Zeile 1:: eine verwendete Version von XML (Extended Modeling Language). Mittels der allgemein bekannten XML-Sprache ist eine Syntax der obenstehenden Beschreibung definiert.
- Zeile 2:: eine verwendete Version von SCL (Substation Configuration Language). Die im IEC-Standardentwurf 61850-6 beschriebene SCL-Sprache definiert eine Semantik oder Bedeutung von Ausdrücken der obenstehenden Beschreibung.
- Zeile 3:: einen Typ der Beschreibung.
- Zeile 4:: einen Beginn einer Beschreibung einer Station respektive eines Anlagenleitsystems.
- Zeile 5:: einen Typ eines Feldbusses, an den die Station angeschlossen ist.
- Zeile 6:: einen Beginn einer Beschreibung eines ersten logischen Feldleitgerätes 11 der Station, mit insbesondere der Identifikation ("J01Cntl") und einer Kommunikationsadresse ("47").
- Zeile 7:: einen Beginn einer Beschreibung eines Servers, welcher Dienste des ersten logischen Feldleitgerätes 11 zur Verfügung stellt. Da das erste logische Feldleitgerät 11 nur einen Server aufweist, ist keine Spezifikation eines Namens erforderlich.
- Zeile 8:: einen Namen ("Q0") respektive eine Identifikation einer "logical node", welche einer Gerätefunktion 12 des (logischen) Feldleitgerätes 11 entspricht. Ein Typ der Funktion ("CCBC") besagt, dass es sich um eine Ansteuerung eines Schalters handelt.
- Zeilen 9-11:: Namen respektive Identifikationen und Typen ("CDIS") von Funktionen des Feldleitgerätes zur Ansteuerung von Trennern.
- Zeile 12:: ein Ende der Beschreibung des Servers.
- Zeile 13:: ein Ende der Beschreibung des ersten logischen Feldleitgerätes.
- Zeilen 14-20:: eine analoge Beschreibung eines zweiten logischen Feldleitgerätes, welches Gerätefunktionen 12 zur Erfassung von Überströmen ("PIOC") und für einen Distanzschutz ("PDIS"), sowie eine Wiedereinschaltfunktion ("RREC") zur Verfügung stellt. .
- Zeile 21:: ein Ende der Beschreibung der Station.

Anhand der Typen der Gerätefunktionen 12 ist der Bedienstation 2 bekannt, welche Dienste ("Services") diese Gerätefunktionen 12 zur Verfügung stellen und welche Datentypen sie benötigen. Dabei entsprechen die Dienste, Datentypen etc... vorzugsweise dem IEC-Standardentwurf 61850. Beispielsweise definiert der Standard für eine Gerätefunktion 12 XCBR zur Ansteuerung eines Schalters, dass sie folgende Dienste aufweist
■ **ODSw** zur Steuerung des Schalters, vom Typ DPC.
■ **Pos** zum Ablesen des Schalterzustands, vom Typ DPS.
■ **MDD** zur Fehleranzeige " motor drive disturbance" , vom Typ SPS.
■ **SF6GasDen** zur Fehleranzeige "SF6 density warning ", vom Typ SPS. wobei die verwendeten Typen mit ihren Attributen
■ **DPC** double point control, mit Attributen für beispielsweise Art (Status, Messwert, Stellwert, Sollwert), Wert (Aktivieren, Deaktivieren, Ungültig, Undefiniert), Ausführungszeit, Dauer und Anzahl Wiederholungen von Steuerpulsen,
■ **DPS** double point status, mit Attributen für Art, Status (Wahr, Falsch, Zwischenwert, Ungültig), Qualität (Ungültig, Übertragungsfehler, Blockiert, Ersetzt, Overflow, etc...), Zeitstempel, und Beschreibungstext, sowie
■ **SPS** single point status, mit ähnlichen Attributen wie DPS, sind.

Ebenso ist definiert, beispielsweise durch den Standard, welche Datentypen oder -Strukturen diese Dienste jeweils benötigen. Ein Aufruf eines Dienstes durch das Bediengerät 2 entspricht einer logischen Verbindung zwischen dem Bediengerät 2 und dem Feldleitgerät 1. Eine logische Verbindung wird durch Sender, Empfänger und Art einer Nachricht oder eines Dienstes beschrieben. Kommunikationsparameter der Verbindung sind durch die Datentypen und Datenformate beschrieben.

Aufgrund dieser Gerätebeschreibung 22 und in Kenntnis des verwendeten Standards ist also bekannt, welche Funktionen das Feldleitgerät 1 aufweist, was für logische Verbindungen entsprechend diesen Funktionen zum Feldleitgerät 1 aufgebaut werden können, und welche Kommunikationsparameter diese logische Verbindungen aufweisen.

Diese Informationen werden erfindungsgemäss durch die Engineeringapplikation 21 verarbeitet, wobei diese Applikation Daten gemäss Figur 3 verarbeitet respektive erzeugt.

Im erfindungsgemässen Verfahren liest die Engineeringapplikation 21 mindestens eine Gerätebeschreibung 22 und erzeugt eine eine visuelle Gerätedarstellung 23 auf einem graphischen Ausgabegerät. Die Gerätedarstellung 23 weist mindestens eine Funktionsdarstellung 24 auf. Ein graphisches Symbol oder eine Ikone der Funktionsdarstellung 24 repräsentiert vorzugsweise den Typ der zugeordneten Gerätefunktion 12. Ein Name der Ikone ("OC", "DIS", "AR") repräsentiert vorzugsweise eine Identität der zugeordneten Gerätefunktion 12. Der Funktionsdarstellung 24 ist eine Softwarekomponente 25 zugeordnet. Die Softwarekomponente 25 weist beispielsweise Informationen über die Identität und die Konfiguration der zugeordneten Gerätefunktion 12 auf.

Um die Konfiguration der Anlage gemäss der Erfindung durchzuführen, werden die Gerätefunktionen 12 den Primärgeräten 6 der Anlage und/oder Funktionen der Bedienstation 2 anhand der visuellen Gerätedarstellung 23 zugeordnet. Duch diese Konfiguration wird also graphisch spezifiziert, welches Feldleitgerät 1 und welche Gerätefunktion 12 ein gegebenes Primärgerät 6 steuern. Ebenso wird vorzugsweise spezifiziert, welche Funktionen der Bedienstation 2 einer Gerätefunktion 12 zugeordnet sind.

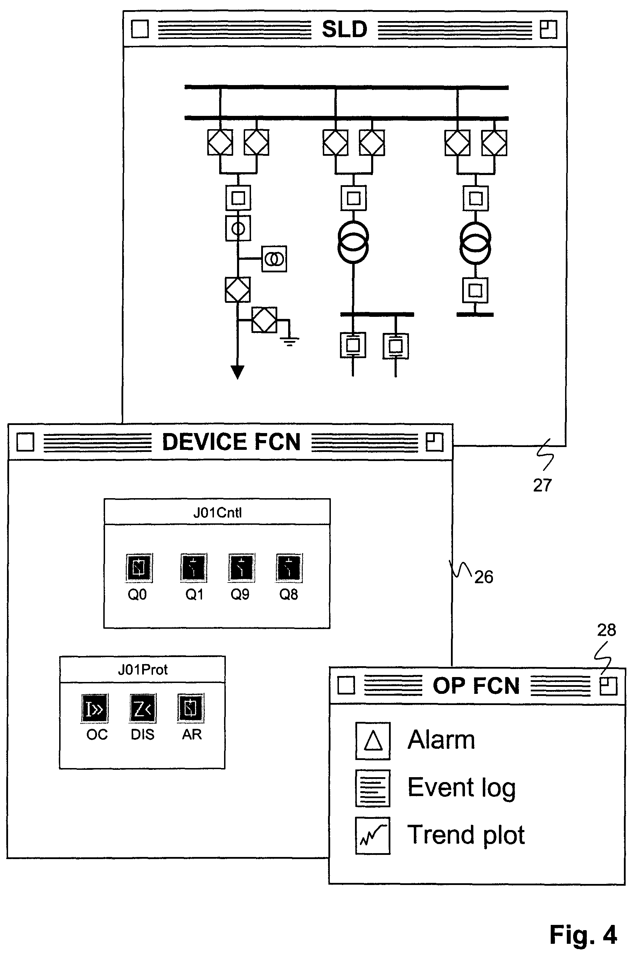

Figur 4 zeigt eine in dieser Variante verwendete graphische Darstellung: Die Darstellung weist eine Geräteübersicht 26 mit Gerätedarstellungen 23 ("J01Prot", "J0lCntl") und zugeordneten Funktionsdarstellungen 24 ("OC", "DIS", AR", etc.) auf, wie sie bereits beschrieben wurden. Ferner weist die Darstellung eine Anlagendarstellung 27 und eine Bedienungsübersicht 28 auf. Die Anlagendarstellung 27 ist eine schematische Darstellung der Anlage, das heisst, der Primärgeräte 6 und ihrer Struktur. Im Falle einer Schaltanlage ist die Anlagendarstellung 27 beispielsweise, wie in der Figur 4 gezeigt, ein Einzelliniendiagramm. Die Bedienungsübersicht 28 enthält graphische Elemente, welche Funktionen der Bedienstation 2 darstellen.

Die Funktionen der Bedienstation 2 sind beispielsweise "Betätigen eines Schalters", "Lesen eines Zustands", "Plotten einer Trendkurve einer Messgrösse", "Eintrag in eine Ereignisliste", "Auslösen eines Alarms", etc.... Diese Funktionen der Bedienstation 2 werden softwaremässig beispielsweise durch Programmelemente, durch Datenstrukturen oder durch Objekte im Sinne einer objektorientierten Programmiermethodologie repräsentiert. Im verwendeten Standard ist vorzugsweise definiert, welche Arten von Funktionen der Bedienstation 2 einer bestimmten Gerätefunktion 12 zugeordnet werden können. Beispielsweise ist definiert, welche Gerätetypen einen Eintrag in einer Ereignisliste erzeigen können.

Die Zuordnung von Gerätefunktionen 12 zu Primärgeräten 6 der Anlage und/oder Funktionen der Bedienstation 2 geschieht anhand der visuellen Gerätedarstellung 23. In einer Variante der Erfindung geschieht dies beispielsweise durch ein bekanntes "drag and drop"-Verfahren, bei welchem eine Ikone einer Funktionsdarstellung 24 mittels eines graphischen Eingabegerätes, beispielsweise einer Computermaus oder eines Trackballs, angewählt und auf ein graphisches Element der Anlagendarstellung 27 respektive der Bedienungsübersicht 28 gezogen wird.

Dabei werden bevorzugterweise nach dem Anwählen der Ikone der Funktionsdarstellung 24 automatisch jene graphischen Elemente visuell markiert, denen die Gerätefunktion 12 zugeordnet werden kann. Beispielsweise werden nach dem Anwählen einer Schaltersteuerung 12 alle noch nicht mit einer zugeordneten Schaltersteuerung 12 versehenen Schalter der Anlagendarstellung 27 durch eine veränderte Farbe oder durch eine blinkende Darstellung markiert.

In einer anderen Variante der Erfindung geschieht die Zuordnung von Gerätefunktionen 12, indem beim Anwählen einer Funktionsdarstellung 24 eine "pop-up"-Liste mit Identifikationen von Primärgeräten 6 und/oder Funktionen der Bedienstation 2 dargestellt wird, denen die angewählte Gerätefunktion 12 zugeordnet werden kann. Umgekehrt kann auch beim Anwählen eines graphischen Elements der Anlagendarstellung 27, welches einem Primärgerät 6 entspricht, eine "pop-up"-Liste zur Auswahl von zuordnungsbaren Gerätefunktionen 12 dargestellt werden.

Die beschriebene Zuordnung einer Gerätefunktion 12 zu einem Primärgerät 6 geschieht vorzugsweise bei der Projektierung der Anlage. In einem Betrieb der Anlage erfolgt eine Ansteuerung des Primärgerätes 6 beispielsweise durch ein Anwählen eines entsprechenden graphischen Elementes in einer ähnlichen Anlagendarstellung wie die in Figur 4 gezeigte Anlagendarstellung 27. Durch das Anwählen erscheinen beispielsweise Benutzerschnittstellen für die eine oder mehrere, dem Primärgerät 6 erfindungsgemäss zugeordneten Gerätefunktionen 12. Die Benutzerschnittstellen sind beispielsweise Standardschnittstellen, die für jeden bekannten Gerätetyp vorgegeben sind, oder werden durch die Gerätefunktion selber erzeugt oder vorgegeben.

Die Zuordnung einer Gerätefunktion 12 zu einer Funktion der Bedienstation 2 bewirkt beispielsweise, dass im Betrieb der Anlage automatisch Signale der Gerätefunktion 12 zu den entsprechenden Funktionen der Bedienstation 2 geleitet werden.

Das erfindungsgemässe Computersystem zur Konfiguration eines Anlagenleitsystems mit mindestens einem Feldleitgerät 1 weist ein graphisches Ausgabegerät, Mittel zur Verarbeitung einer standardisierten textuellen Gerätebeschreibung 22 von mindestens einer Gerätefunktion 12 des mindestens einen Feldleitgerätes 1, Mittel zur Erzeugung einer visuellen Gerätedarstellung 23 nach Massgabe der Gerätebeschreibung 22 auf dem graphischen Ausgabegerät, Mittel zur Darstellung weiterer visueller Objekte auf dem graphischen Ausgabegerät, sowie ein graphisches Eingabegerät und Mittel zur Zuordnung von Gerätefunktionen 12 zu mindestens einem der weiteren visuellen Objekte auf.

In einer bevorzugten Variante der Erfindung weist das Computersystem Mittel zur Darstellung einer Anlagendarstellung 27 auf dem graphischen Ausgabegerät auf, wobei die weiteren visuellen Objekte Repräsentationen von Primärgeräten 6 der Anlage sind.

In einer weiteren bevorzugten Variante der Erfindung weist das Computersystem Mittel zur Darstellung einer Bedienungsübersicht 28 auf dem graphischen Ausgabegerät auf, wobei die weiteren visuellen Objekte Repräsentationen von Funktionen der Bedienstation 2 der Anlage sind.

Ein wesentlicher Vorteil der Erfindung ist, dass eine manuelle und fehlerhafte Zuordnung von textuell dargestellten Signalen entfällt, und dass durch die visuelle Programmierweise eine Konfiguration der Anlage vereinfacht und ihre Qualität verbessert wird. Die visuelle Zuordnung erlaubt auch eine Konzentration eines Bedieners auf das Wesentliche, das heisst, auf die Struktur der Anlage, im Gegensatz zu langen Signallisten. Da Funktionen und Signale einem Standard entsprechen, welcher auch Daten- und Signaltypen beinhaltet, kann eine Kontrolle einer Zulässigkeit von benutzerspezifizierten Verbindungen automatisch anhand dieser Typen erfolgen.

Ein weiterer Vorteil der Erfindung ist, dass die Verwendung des zitierten IEC-Standards für die Gerätebeschreibung 22 ein Einbindung von standardkonformen Geräten verschiedener Hersteller erlaubt. Dies ist eine wesentlicher Vorteil, da ansonsten herstellerspezifische Gerätebeschreibungen verarbeitet werden müssen, so dass in der Regel keine Integrationswerkzeuge für Geräte verschiedene Hersteller existieren.

In einer bevorzugten Variante der Erfindung findet die Konfiguration während einer Anlagenprojektierung und auf einem Entwicklungsrechner statt. Dabei wird vorzugsweise die textuelle Gerätebeschreibung 22 als Datei vorgegeben.

In einer anderen bevorzugten Variante der Erfindung findet die Konfiguration während einer Inbetriebnahme der Anlage statt. Dabei werden textuelle Gerätebeschreibungen 22 vorzugsweise durch die Feldleitgeräte 1 an die Bedienstation 2, welche auch der Konfiguration dient, geschickt. Dadurch entfällt ein Aufwand für die Projektierung der Anlage und für eine Erhaltung einer Konsistenz von Spezifikationsdaten.

### Bezugszeichenliste

- 1: Feldleitgerät
- 2: Bedienstation
- 3: erster Kommunikationsbus
- 4: Buskoppler
- 5: zweiter Kommunikationsbus
- 6: Primärgerät
- 11,11': logisches Feldleitgerät
- 12: Gerätefunktion
- 21: Engineeringapplikation
- 22: Gerätebeschreibung
- 23: Gerätedarstellung
- 24: Funktionsdarstellung
- 25: Softwarekomponente
- 26: Geräteübersicht
- 27: Anlagendarstellung
- 28: Bedienungsübersicht

## Patentansprüche

1. Verfahren zur Konfiguration eines Anlagenleitsystems für eine Anlage mit mindestens einem Feldleitgerät (1), dadurch gekennzeichnet,
a) dass für eine Beschreibung des mindestens einen Feldleitgeräts (1) eine standardisierte textuelle Gerätebeschreibung (22) verwendet wird,
b) dass von mindestens einer Gerätefunktion (12) des mindestens einen Feldleitgerätes (1) anhand der Gerätebeschreibung (22) eine visuelle Gerätedarstellung (23) auf einem graphischen Ausgabegerät erzeugt wird,
c) dass weitere visuelle Objekte auf dem graphischen Ausgabegerät dargestellt werden, und
d) dass entsprechend einer Benutzereingabe mindestens eine Gerätefunktion (12) mindestens einem der visuellen Objekte zugeordnet wird.

2. Verfahren gemäss Anspruch 1, dadurch gekennzeichnet, dass die weiteren visuellen Objekte Primärgeräten (6) einer Anlagendarstellung (27) entsprechen, und dass entsprechend einer Benutzereingabe mindestens eine Gerätefunktion (12) einem Primärgerät (6) der Anlage zugeordnet wird.

3. Verfahren gemäss Anspruch 1, dadurch gekennzeichnet, dass die weiteren visuellen Objekte Funktionen einer Bedienungsübersicht (28) entsprechen, und dass entsprechend einer Benutzereingabe mindestens eine Gerätefunktion (12) einer Funktion einer Bedienstation (2) zugeordnet wird.

4. Verfahren gemäss Anspruch 2 oder 3, dadurch gekennzeichnet, dass die Zuordnung der mindestens einen Gerätefunktion (12) in Abhängigkeit einer Prüfung von Funktions- oder Datentypen geschieht.

5. Verfahren gemäss Anspruch 1, dadurch gekennzeichnet, dass die Gerätebeschreibung (22) der Gerätefunktion (12) eine Beschreibungssprache entsprechend dem IEC-Standard 61850-6 oder seinem Entwurf verwendet.

6. Verfahren gemäss Anspruch 1, dadurch gekennzeichnet, dass das Anlagenleitystem eine Hoch- oder Mittelspannungsschaltanlage steuert.

7. Verfahren gemäss Anspruch 2, dadurch gekennzeichnet, dass die Anlagendarstellung (27) ein Einzelliniendiagramm einer Schaltanlage ist.

8. Verfahren gemäss Anspruch 1, dadurch gekennzeichnet, dass die Konfiguration während einer Anlagenprojektierung und auf einem Entwicklungsrechner ausgeführt wird, und dass die Gerätebeschreibung (22) in Form einer Textdatei vorliegt.

9. Verfahren gemäss Anspruch 1, dadurch gekennzeichnet, dass die Konfiguration während einer Inbetriebnahme der Anlage ausgeführt wird, und dass die Gerätebeschreibung (22) durch das mindestens eine Feldleitgerät (1) gespeichert und an eine Bedienstation (2) zur Ausführung einer Engineeringapplikation (21) geschickt wird.

10. Computersystem zur Konfiguration eines Anlagenleitsystems mit mindestens einem Feldleitgerät (1), wobei das Computersystem ein graphisches Ausgabegerät aufweist, dadurch gekennzeichnet, dass das Computersystem
a) Mittel zur Verarbeitung einer standardisierten textuellen Gerätebeschreibung (22) von mindestens einer Gerätefunktion (12) des mindestens einen Feldleitgerätes (1),
b) Mittel zur Erzeugung einer visuellen Gerätedarstellung (23) nach Massgabe der Gerätebeschreibung (22) auf dem graphischen Ausgabegerät,
c) Mittel zur Darstellung weiterer visueller Objekte auf dem graphischen Ausgabegerät, sowie
d)ein graphisches Eingabegerät und Mittel zur Zuordnung von Gerätefunktionen (12) zu mindestens einem der weiteren visuellen Objekte aufweist.

11. Computersystem gemäss Anspruch 10, dadurch gekennzeichnet, dass das Computersystem Mittel zur Darstellung einer Anlagendarstellung (27) auf dem graphischen Ausgabegerät aufweist, und dass die weiteren visuellen Objekte Repräsentationen von Primärgeräten (6) der Anlage sind.

12. Computersystem gemäss Anspruch 10, dadurch gekennzeichnet, dass das Computersystem Mittel zur Darstellung einer Bedienungsübersicht (28) auf dem graphischen Ausgabegerät aufweist, und dass die weiteren visuellen Objekte Repräsentationen von Funktionen einer Bedienstation (2) der Anlage sind.

13. Computersystem gemäss Anspruch 10, dadurch gekennzeichnet, dass die Funktionen des Feldleitgeräts (11) in einer Beschreibungssprache entsprechend dem IEC-Standard 61850-6 oder seinem Entwurf beschrieben sind.
